# DEMANDE DE BREVET EUROPEEN

(11) **EP 4 678 072 A1**
(43) Date de publication de la demande: **14.01.2026**
(21) Numéro de dépôt: 25187586.0
(22) Date de dépôt: 04.07.2025
(51) Int. Cl.: A47J 31/18, A23L 5/20, A47J 31/44

(54) **DISPOSITIF D'INFUSION À ULTRASONS**

(30) Priorité: 08.07.2024 BE 202405430; 08.07.2024 US 202418766105
(71) Demandeur: R-Tech4 srl, 1380 Lasne (BE)
(72) Inventeur: Cocle, Roger, 1380 Lasne (BE)
(74) Mandataire: Kirkpatrick

(57) **Abrégé**

L'invention concerne un dispositif d'infusion à ultrasons (1) comprenant un générateur d'ondes ultrasoniques (2), un bassin (4) physiquement relié au générateur d'ondes ultrasoniques (2) pour former un ensemble rigide (2;4) et dans lequel ledit bassin (4) est agencé pour comprendre un liquide conducteur d'ultrasons (9), et un récipient à infusion (7) comprenant une base (701), dans lequel des moyens d'absorption de vibrations (6) sont montés entre l'ensemble rigide (2 ;4) et un support agencé pour retenir le récipient (5;501;502;503;504), et dans lequel la base (701) du récipient à infusion (7) est dimensionnée pour être retenue par le support de récipient (5;501;502;503;504) et est agencée pour baigner dans le liquide conducteur d'ultrasons du bassin de façon à assurer un contact continu avec le liquide conducteur d'ultrasons (9).

## Description

### Domaine de l'invention

L'invention concerne le domaine de l'infusion ultrasonique de composants compris dans des ingrédients comestibles non liquides tels que des fruits, des légumes et/ou d'autres plantes dans un liquide. Elle concerne en particulier un dispositif d'infusion à ultrasons pour la préparation de boissons aromatisées et son utilisation.

### Historique de l'état de l'art

L'utilisation d'ultrasons pour infuser des ingrédients comestibles tels que des fruits, des légumes et/ou d'autres plantes dans un liquide est bien connue dans l'industrie alimentaire. En effet, alors qu'une infusion "naturelle" ou passive à froid prend généralement plusieurs heures pour une extraction médiocre, l'utilisation des ultrasons permet d'accélérer ce processus.

En règle générale, les ondes ultrasoniques de haute intensité et de basse fréquence créent de minuscules bulles de vide dans le liquide. Ces petites bulles grossissent rapidement au cours de plusieurs cycles de raréfaction et de compression. Lorsque les cavités atteignent une taille telle qu'elles ne peuvent plus absorber d'énergie, elles implosent violemment, créant le phénomène de cavitation acoustique. L'énergie créée par l'effondrement des bulles est utilisée pour extraire les arômes des plantes et des légumes, puis pour dissoudre et incorporer les arômes et les ingrédients dans le liquide avec une plus grande efficacité et en très peu de temps. Les ultrasons peuvent donc être utilisés pour infuser rapidement des boissons ou des breuvages au profil aromatique riche.

Ce processus est appliqué à l'échelle industrielle, dans de grands réacteurs. Cependant, très peu de possibilités ont été divulguées pour des applications domestiques.

Il existe plusieurs techniques pour générer et transmettre des ultrasons au liquide à infuser. Il existe notamment des sondes à ultrasons, placées directement dans le liquide, ou des bains à ultrasons dans lesquels un générateur d'ondes ultrasoniques est connecté à un bassin pour transmettre les ultrasons directement au contenu du bassin.

WO20231964404A1 divulgue un dispositif domestique comprenant un récipient et une base disposés pour être vissés ensemble afin de créer un contact physique étroit entre les deux. Cependant, lorsque les surfaces de deux objets rigides sont conçues pour être en contact étroit, ce contact est rarement parfait et l'interface laisse passer des espaces d'air, ce qui réduit l'efficacité de la transmission des ultrasons et génère des vibrations. Dans le présent document, une antenne est également mise en place dans le récipient afin d'assurer une bonne homogénéité des ultrasons dans la solution à infuser.

D'autres dispositifs utilisent un liquide (eau) comme milieu intermédiaire pour conduire les ondes ultrasoniques entre le générateur d'ondes et tout objet qui n'est pas directement relié physiquement au générateur d'ondes. En effet, un liquide conducteur peut combler les lacunes de conductivité entre les surfaces afin d'assurer un transfert efficace des ondes ultrasoniques. Dans le cas des bains à ultrasons, le générateur d'ondes est directement relié à un bassin, qui est ensuite remplie d'un liquide ou d'un gel conducteur, de sorte que le récipient dans lequel l'extraction a lieu est immergé dans le liquide. Le récipient repose généralement sur le fond du bassin.

En particulier, US20200148985A1 divulgue par exemple un dispositif d'infusion électronique pour infuser une substance liquide par bain d'ultrasons. Un récipient à infusion est disposé pour être déposé directement dans un bassin comprenant un liquide conducteur et soumis à des vibrations lorsque le générateur d'ondes fonctionne. Dans de tels appareils, destinés à un usage domestique, un problème de stabilité et de vibration se pose, car le récipient dispose d'un degré de liberté pour se déplacer dans le bassin. Une quantité importante d'énergie est ainsi perdue, ce qui réduit l'efficacité de l'infusion, génère un bruit désagréable et entraîne l'usure du récipient.

Le demandeur a donc jugé nécessaire de mettre au point un dispositif d'infusion à ultrasons pour surmonter au moins certains de ces problèmes.

### Solution de l'invention

À cette fin, l'invention concerne un dispositif d'infusion à ultrasons comprenant :
- Un générateur d'ondes ultrasoniques,
- Un bassin physiquement relié au générateur d'ondes ultrasoniques pour former un ensemble rigide et dans lequel ledit bassin est conçu pour comprendre un liquide conducteur d'ultrasons, et
- Un récipient à infusion comprenant une base,
**ledit dispositif étant caractérisé en ce qu'**
il comprend des moyens d'absorption de vibrations montés entre l'ensemble rigide et un support agencé pour retenir le récipient, et dans lequel la base du récipient à infusion est dimensionnée pour être retenue par le support de récipient et est agencée pour baigner dans le liquide conducteur d'ultrasons du bassin de façon à assurer un contact continu avec le liquide conducteur d'ultrasons.

Le dispositif d'infusion à ultrasons de l'invention permet à la base du récipient à infusion d'être en contact permanent (c'est-à-dire sans espaces d'air ni bulles) avec le liquide conducteur pour une transmission optimale des ondes ultrasoniques au contenu du récipient à infusion où l'infusion doit avoir lieu, sans avoir à déposer directement le récipient à infusion dans le bassin, ce qui évite la perte d'énergie dans les vibrations lorsque le générateur d'ondes ultrasoniques est en fonctionnement. De cette manière, le récipient à infusion est parfaitement stable et les vibrations du bassin ne lui sont pas transmises. Le dispositif peut également avoir un niveau sonore très faible et le récipient à infusion n'est pas soumis à l'usure induite par le frottement entre le bassin et le contenu résultant des vibrations.

Le document WO2017010670A1 de l'art antérieur divulgue un dispositif d'extraction de café à froid qui utilise des vibrations ultrasoniques. Le système comprend une unité de vibration magnétique reliée, de manière rigide, à un support plat sur lequel repose un récipient contenant le liquide à extraire. Les vibrations générées par l'unité de vibration sont transmises directement au support et, par conséquent, au récipient, sans l'intermédiaire d'un liquide conducteur d'ultrasons. L'absence de liquide conducteur implique donc une transmission des ultrasons par une interface solide-solide entre le support et le récipient, ce qui entraîne des pertes d'énergie significatives dues aux irrégularités de contact et à une dissipation vibratoire accrue à l'interface. En ce sens, WO2017010670A1 utilise une autre technique de transmission des ultrasons qui diffère complètement de celle de la présente invention, qui utilise un liquide conducteur d'ultrasons. Par ailleurs, bien que WO2017010670A1 comprenne des moyens d'absorption de vibrations formés par des ressorts élastiques, ceux-ci ont pour objectif principal de stabiliser la base du dispositif et de guider le mouvement vertical et oscillatoire du support plat pour transmettre les ultrasons au récipient reposant directement le support plat. La présente invention consiste, au contraire, à stabiliser le support du récipient par les moyens d'absorption de vibrations et à veiller à ce que les ultrasons soient transmis par le liquide conducteur et non par le support. En conséquence, un homme du métier n'aurait tout d'abord aucune motivation particulière à combiner US20200148985A1 avec WO2017010670A, et quand bien même il les combinerait, il n'aboutirait pas à la présente invention car la transmission par le support décrite par WO2017010670A détourne l'homme du métier de l'utilisation d'un bassin comprenant un liquide conducteur d'ultrasons et d'un support agencé pour retenir un récipient dont la base est elle-même agencée pour baigner dans le liquide conducteur d'ultrasons du bassin.

### Générateur d'ondes

Le générateur d'ondes ultrasoniques peut être n'importe quel type de générateur capable de générer des ondes ultrasoniques, tel qu'un transducteur électrostrictif. Pour le faire fonctionner, le générateur est connecté à une carte électronique, comme le sait l'homme du métier. Le générateur d'ondes ultrasoniques peut, par exemple, être un transducteur piézoélectrique comprenant des électrodes placées de part et d'autre d'un matériau piézoélectrique.

En règle générale, plus la fréquence des ultrasons générés par le générateur d'ondes ultrasoniques est basse, plus l'infusion est efficace. D'autre part, la fréquence ne doit pas être trop basse pour éviter les fréquences audibles. Un compromis doit être trouvé entre l'efficacité et le confort de l'utilisateur. Le générateur d'ondes ultrasoniques est de préférence conçu pour émettre des ondes entre 20 et 100 kHz, de préférence entre 22 et 60 kHz, de préférence entre 25 et 40 kHz, de préférence encore autour de 28 kHz pour une infusion optimale des spectres les plus larges de fruits, de légumes et/ou d'autres plantes.

Idéalement, la puissance du générateur d'ondes ultrasoniques est comprise entre 10W et 200 W par litre de liquide à infuser, de préférence entre 20W et 150W, de préférence entre 40W et 80W, de préférence encore autour de 60W par litre de liquide contenu dans le récipient à infusion. Cela permet d'obtenir un bon compromis entre une infusion efficace et le fait d'éviter de chauffer le liquide. En effet, la production de chaleur dans le liquide infusé peut entraîner la dégradation de certaines espèces extraites. En outre, le dispositif permet l'infusion rapide et à la demande de boissons destinées à la consommation directe, et le liquide infusé doit être directement buvable sans qu'il soit nécessaire d'ajouter de la glace.

### Bassin

Le bassin est physiquement relié au générateur d'ondes ultrasoniques pour former un ensemble rigide, par exemple par collage et/ou vissage, ou par tout autre moyen connu de l'homme du métier permettant de relier physiquement deux pièces, tel que le boulonnage, la soudure, etc. Ainsi, une surface utile du générateur d'ultrasons est en contact parfait avec une surface du bassin pour former ledit "ensemble rigide". Grâce à cet ensemble rigide, les ultrasons générés par le générateur d'ondes ultrasoniques sont entièrement transmis au bassin.

Pour des raisons de durabilité, le bassin est de préférence résistant à la détérioration sous l'effet des ultrasons. De préférence, le bassin est en acier inoxydable, de préférence en acier inoxydable 304L ou 316L . En variante, il peut être en métal tel que l'acier, le titane ou tout autre matériau connu de l'homme du métier pour être résistant à la détérioration sous l'effet des ultrasons.

Le dispositif doit pouvoir transmettre les ultrasons de l'ensemble rigide au récipient à infusion, qui n'est pas physiquement relié à l'ensemble rigide, de la manière la plus efficace possible. À cet égard, le bassin est conçu pour comprendre un liquide conducteur d'ultrasons. En effet, il est important qu'un liquide soit utilisé comme conducteur d'ultrasons entre l'ensemble rigide et le récipient à infusion qui n'est pas directement relié physiquement à l'ensemble rigide. Même si les surfaces du bassin et du récipient à infusion sont conçues pour être plates, elles ne peuvent l'être complètement sans un usinage de très haute précision et très coûteux. Le liquide conducteur d'ultrasons comble les lacunes de conductivité entre les surfaces afin de faciliter le transfert efficace des ondes ultrasoniques.

De préférence, le bassin est conçu comme une entité étanche avec un fond et des parois latérales s'étendant vers le haut sur tout le périmètre du fond. De préférence, le fond a une forme ronde et les parois latérales forment un cylindre avec un bord supérieur. La forme ronde est la meilleure pour l'homogénéité de la diffusion des ultrasons, mais elle n'est pas obligatoire.

Pour faciliter l'utilisation et assurer une transmission efficace, le liquide conducteur d'ultrasons est de préférence de l'eau. Le liquide conducteur d'ultrasons peut également être tout autre liquide ou gel ayant de préférence des propriétés avantageuses en ce qui concerne sa conductivité ultrasonique.

### Récipient à infusion et moyens d'absorption de vibrations

Le récipient à infusion n'est pas physiquement relié au reste du dispositif. Il est conçu pour contenir un liquide infusé, par exemple de l'eau, de l'huile ou de l'alcool, et des ingrédients comestibles tels que des fruits, des légumes et/ou d'autres plantes. Le récipient à infusion est censé être la destination finale des ondes ultrasoniques.

Le dispositif selon l'invention ne prévoit pas que le récipient à infusion soit déposé directement dans le bassin. En effet, selon l'invention, le récipient à infusion ne doit pas pouvoir se déplacer et entrer en contact avec le fond et les parois du bassin qui sont soumis aux vibrations générées par le générateur d'ondes ultrasoniques. Si le récipient à infusion vibre, l'efficacité de la transmission des ultrasons à l'intérieur du récipient à infusion est réduite, de même que le confort de l'utilisateur.

À cette fin, le dispositif comprend un support de récipient ou un moyen de soutien pour le récipient à infusion.

En conséquence, pour relier physiquement l'ensemble rigide, qui est potentiellement soumis à des vibrations, au support de récipient sans transmettre le mouvement vibratoire, le dispositif comprend des moyens d'absorption de vibrations qui sont montés entre l'ensemble rigide et le support de récipient. Dans certains cas, le support de récipient et les moyens d'absorption de vibrations peuvent être fusionnés en un seul élément, tel qu'un joint d'étanchéité ou un joint en caoutchouc.

Les moyens d'absorption de vibrations peuvent comprendre des joints, des bumpers, des amortisseurs , etc.

Pour déposer le récipient à infusion sur le support de récipient sans lui transmettre de mouvements vibratoires, la base du récipient à infusion est de préférence dimensionnée pour être supportée par le support de récipient. En fonction de la géométrie du support de récipient, la dimension de la base du récipient à infusion doit être adaptée pour qu'il puisse être placé sur le support de récipient. Par exemple, si le support de récipient a une géométrie annulaire, la base du récipient à infusion doit être suffisamment grande pour reposer et être stable sur le support de récipient. De cette manière, le récipient à infusion peut être placé sur le dispositif sans être soumis aux mouvements vibratoires générés par le générateur d'ondes ultrasoniques.

En même temps, le support de récipient doit être positionné dans le dispositif de telle sorte que, lorsque le récipient à infusion repose dessus, la base du récipient à infusion se trouve à une hauteur non nulle au-dessus du fond du bassin, mais en dessous du bord supérieur du bassin. Cela signifie que la base du récipient à infusion peut être en contact permanent avec le liquide conducteur d'ultrasons dans le bassin, à condition que l'utilisateur ait placé la quantité appropriée de liquide dans le bassin. Idéalement, lorsque le récipient à infusion est placé sur le support du récipient, l'épaisseur du liquide conducteur d'ultrasons entre la base du récipient à infusion et le fond du bassin est comprise entre 1 mm et 10 mm, de préférence entre 2 mm et 7 mm, et de préférence encore autour de 5 mm.

Le support de récipient peut être un élément unique capable de soutenir le récipient à infusion ou peut comprendre plusieurs éléments qui, ensemble, soutiennent le récipient à infusion.

Avantageusement, le support de récipient peut comprendre une partie s'étendant pour former un support sur la surface sur laquelle le dispositif est placé. De cette manière, les vibrations ne sont pas transmises au récipient à infusion ou à la surface sur laquelle le dispositif est placé, ce qui garantit une infusion plus efficace et un plus grand confort pour l'utilisateur.

Le support de récipient fait de préférence partie d'un boîtier pour le dispositif. L'ensemble rigide est relié à celui-ci par des moyens d'absorption de vibrations, c'est-à-dire des moyens de fixation comprenant un élément d'absorption de vibrations. Pour protéger l'utilisateur du générateur d'ondes ultrasoniques, le boîtier entoure l'ensemble rigide et comprend une ouverture supérieure définie par un bord supérieur. Le bord supérieur entoure les parois du bassin sans les toucher directement, de sorte qu'une couche d'air reste entre le bassin et le boîtier . Cette couche d'air, qui est un mauvais conducteur d'ultrasons par rapport à un liquide, empêche les ultrasons d'être transmis au boîtier afin d'optimiser l'efficacité de l'infusion. Le bord supérieur du boîtier est conçu pour soutenir la base du récipient à infusion. Le bord supérieur du boîtier est donc le support du récipient.

Idéalement, pour placer le récipient à infusion sur le support de récipient sans risque qu'il glisse et tombe, le support de récipient comprend une surface antidérapante ou adhérente sur laquelle le récipient à infusion peut être placé. De préférence, la surface adhérente est également souple pour atténuer les vibrations qui peuvent subsister malgré les moyens d'absorption des vibrations. En règle générale, un joint, de préférence un joint en caoutchouc, peut convenir. Avantageusement et facultativement, le joint sert en outre de joint étanche entre le support de récipient ou le boîtier et le bassin. De préférence, le joint est conçu avec une rainure annulaire pour accueillir le bord du bassin, de sorte que le bassin, potentiellement soumis à des vibrations, puisse glisser dans le joint de manière à assurer l'étanchéité pour le liquide conducteur d'ultrasons.

Avantageusement, le joint comprend, alternativement ou en plus, un espace creux afin d'empêcher la perte d'ultrasons à travers celui-ci.

Pour transmettre efficacement les ultrasons générés par le générateur d'ondes ultrasoniques au récipient à infusion, la base du récipient à infusion est formée de manière à assurer un contact continu avec le liquide conducteur d'ultrasons. Un contact continu signifie que toute la surface inférieure de la base du récipient à infusion est en contact avec le liquide conducteur d'ultrasons, qu'il n'y a pas d'espace qui pourrait bloquer la transmission des ultrasons et réduire l'efficacité de l'infusion. La forme de la base doit également maximiser la surface de contact avec le liquide conducteur d'ultrasons.

La base peut, par exemple, avoir une forme convexe de sorte que ses côtés ou son bord reposent sur le support du récipient et que sa partie convexe est en contact permanent avec le liquide conducteur d'ultrasons. Par exemple, le récipient à infusion a la forme d'une bouteille ou d'un Erlenmeyer avec un fond plat et un bord arrondi formant la base. Le bord repose sur le support, ce qui permet au fond plat d'être à un niveau légèrement inférieur et d'être dans le bassin pour entrer en contact avec le liquide.

Pour une bonne conduction des ultrasons, le récipient à infusion peut être en verre ou en dérivé de verre. Alternativement, tout autre matériau résistant à la détérioration sous l'effet des ultrasons peut convenir.

Avantageusement, lorsque le récipient à infusion est en verre, la surface extérieure de sa base peut être sablée pour être floue à l'état sec mais devenir transparente au contact du liquide . Cela permet à l'utilisateur, lorsqu'il place le récipient à infusion sur le support de récipient, de vérifier que la base du récipient à infusion est bien en contact permanent avec le liquide conducteur d'ultrasons. Si la base du récipient à infusion n'est pas complètement transparente, cela indique à l'utilisateur qu'il peut y avoir des bulles ou qu'il y a un manque de liquide conducteur d'ultrasons dans le bassin, ou peut-être que le récipient est mal positionné. Dans certains cas, un marqueur peut être imprimé sur le fond du bassin, qui devient visible lorsque le verre sablé devient transparent après la mise en place correcte du récipient à infusion.

En option, la forme du récipient à infusion peut être conçue pour rediriger les ultrasons vers le centre du récipient à infusion afin d'augmenter l'efficacité de l'infusion. De préférence, le récipient à infusion a une forme conique, comme par exemple une forme Erlenmeyer , pour rediriger les ultrasons vers le centre du récipient à infusion, améliorant ainsi l'homogénéité de l'infusion.

En option, le dispositif selon l'invention comprend un interrupteur pour activer ou désactiver le générateur d'ondes ultrasoniques. L'interrupteur peut également comprendre une minuterie pour contrôler la durée de l'infusion.

### Description détaillée de l'invention

L'invention sera mieux comprise en se référant aux dessins où
La figure 1 illustre une vue éclatée d'un exemple de dispositif selon l'invention ;
La figure 2 est une vue en coupe du dispositif de la figure 1 ;
La figure 3 est une vue en coupe d'un autre exemple de dispositif selon l'invention dans lequel les moyens d'absorption de vibrations se trouvent sur les parois du bassin ;
La figure 4 est une vue en coupe d'un autre exemple de dispositif selon l'invention, dans lequel les moyens d'absorption de vibrations sont situés sous le bassin ;
La figure 5 est une vue en coupe d'un autre exemple de dispositif selon l'invention, dans lequel les moyens d'absorption de vibrations se trouvent dans le bassin.

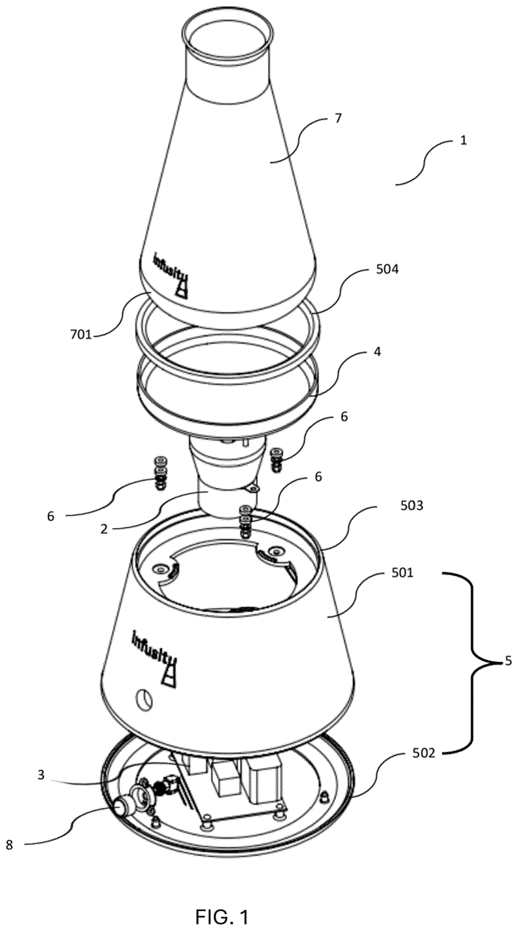

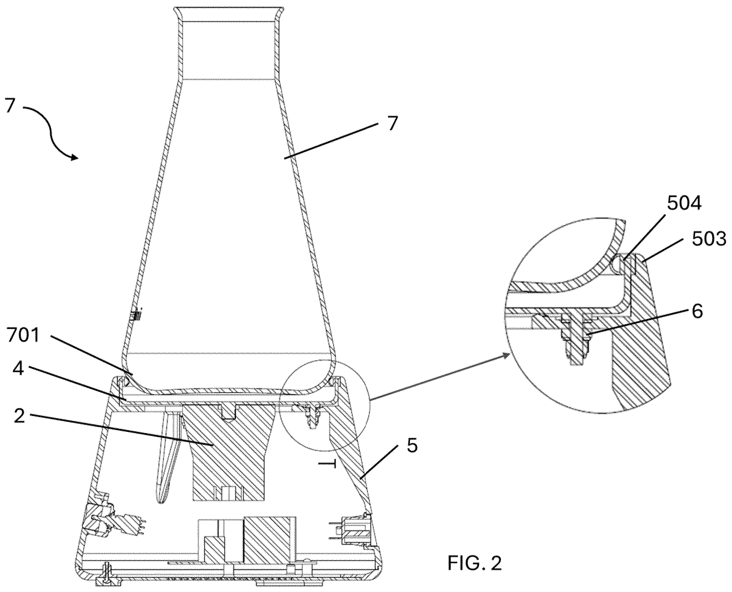

En référence aux figures 1 et 2, un dispositif d'infusion à ultrasons 1 selon l'invention comprend un générateur d'ondes ultrasoniques 2, qui est ici un transducteur piézoélectrique comprenant des électrodes placées de part et d'autre d'un matériau piézoélectrique. Le générateur 2 est relié électriquement à une carte électronique 3 bien connue de l'homme du métier. Un bassin 4, destiné à être rempli d'un liquide conducteur d'ultrasons, est réalisé en acier inoxydable 304L. Sa face inférieure est reliée par collage et vissage à la surface supérieure du générateur 2 pour former un ensemble rigide 2;4. Un boîtier 5 comprend ici une partie supérieure tronconique 501 entourant le générateur 2, la carte électronique 3 et le bassin 4, et une partie inférieure 502, qui sert de socle. Les deux parties 501 et 502 sont vissées l'une à l'autre.

La partie supérieure 501 du boîtier 5 comprend un anneau interne dans lequel des trous sont pratiqués pour accueillir des bumpers 6 qui sont également reliés à des brides faisant saillie de l'ensemble rigide 2;4 (du générateur d'ondes 2), afin d'agir comme des absorbeurs de vibrations entre l'ensemble rigide et le boîtier.

Le bord supérieur 503 du boîtier 5 entoure les parois du bassin 4, laissant une couche d'air pour empêcher la perte d'ultrasons. Pour placer le récipient à infusion 7 sur le boîtier 5 sans qu'il risque de glisser ou de tomber, un joint en caoutchouc souple et adhérent 504 est placé sur le bord supérieur 503 du boîtier 5. Le joint 504 comporte une rainure dans laquelle est insérée le bassin 4 afin d'éviter qu'un liquide conducteur d'ultrasons ne s'infiltre entre le boîtier 5 et le bassin 4 et n'endommage les composants électriques. En outre, le joint 504 est creux pour éviter que les ultrasons ne se perdent à travers lui. Le récipient à infusion 7 est en verre et a une forme conique, plus particulièrement en forme d'Erlenmeyer afin de concentrer les ultrasons vers le centre du récipient 7. Sa base 701 est dimensionnée pour être supportée par le boîtier 5 et le joint 504 à son bord 503. En outre, la base 701 du récipient 7 est plate avec un bord arrondi de sorte que la partie plate est en contact continu avec le liquide conducteur d'ultrasons dans le bassin 4 tandis que le bord arrondi repose sur le boîtier.

Le fond 701 du récipient 7 est ici sablé, de sorte qu'il devient transparent au contact du liquide conducteur d'ultrasons. Pour la commodité de l'utilisateur, le liquide conducteur d'ultrasons est censé être de l'eau.

Par exemple, le récipient à infusion 7 est conçu pour contenir 2L de liquide, par exemple de l'eau avec des ingrédients comestibles tels que des fruits et des légumes. La puissance du générateur 2 est de 60W/L pour une infusion optimale sans risque d'échauffement du liquide dans le récipient 7, soit une puissance de 120W. Le dispositif comprend un bouton ON/OFF 8 pour activer ou désactiver le générateur 2.

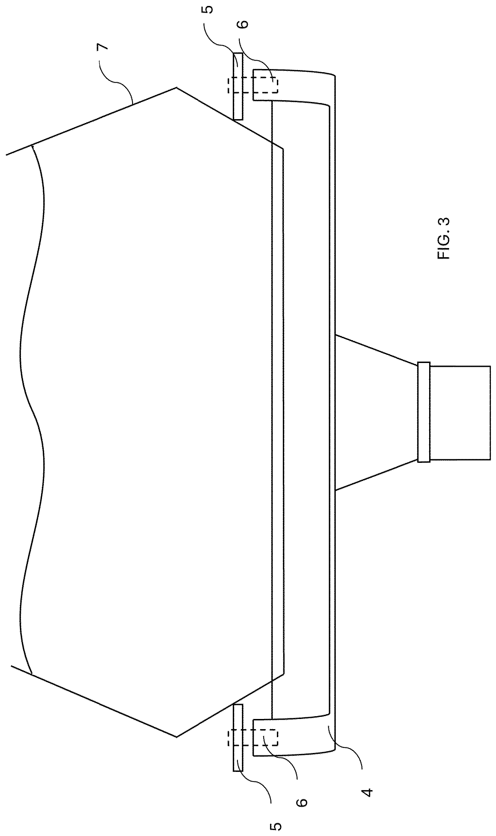

La figure 3 montre un autre exemple de dispositif selon l'invention dans lequel les moyens d'absorption de vibrations 6 sont montés sur les parois du bassin 4 et dans lequel le support de récipient 5 est relié aux moyens d'absorption de vibrations 6.

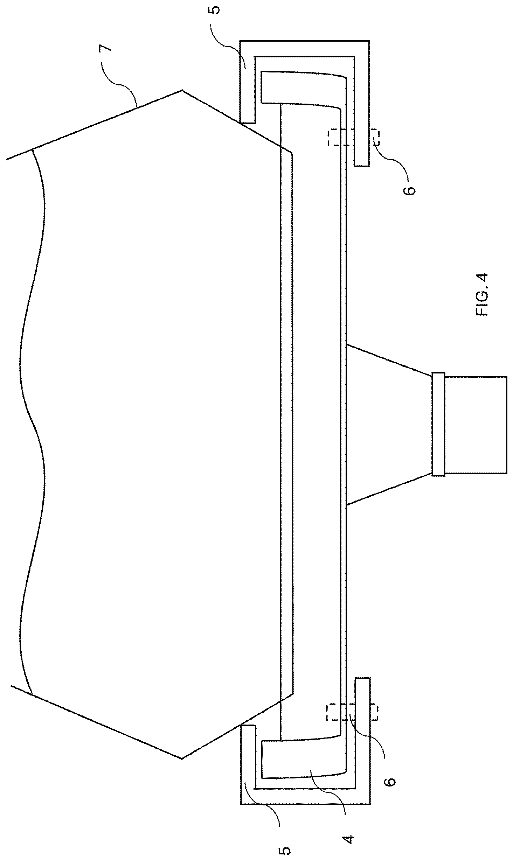

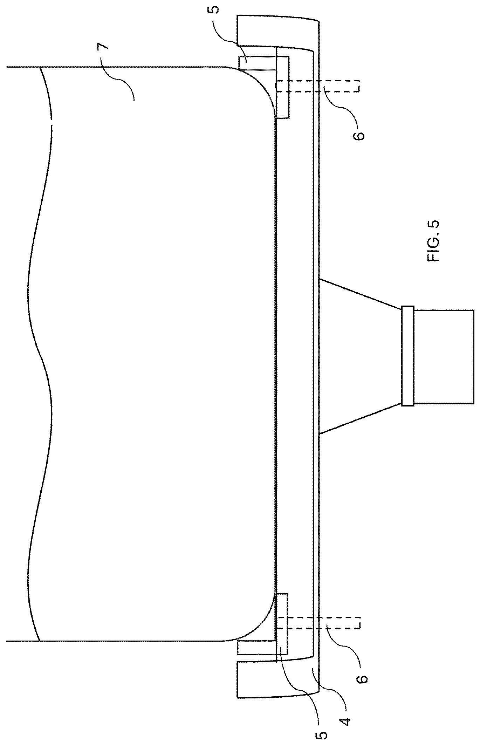

Selon un autre exemple, illustré à la figure 4, les moyens d'absorption de vibrations sont montés sous le bassin 4 et le support de récipient 5 est relié à ces moyens d'absorption de vibrations 6 sous le bassin 4 et s'élève au-dessus du bassin 4 afin que le conteneur d'infusion 7 puisse y être placé. Dans un autre exemple, illustré à la figure 5, les moyens d'absorption de vibrations 6 sont montés dans le bassin 4 et reliés au support de conteneur 5, qui peut être un anneau partiellement immergé dans le bassin ou une pluralité de tampons de forme appropriée. Le conteneur a ici une forme cylindrique classique.

Les différentes caractéristiques illustrées dans ces exemples peuvent être combinées, ce qui est évident pour une personne versée dans l'art.

## Revendications

1. Dispositif d'infusion à ultrasons (1) comprenant :
- Un générateur d'ondes ultrasoniques (2),
- Un bassin (4) physiquement relié au générateur d'ondes ultrasoniques (2) pour former un ensemble rigide (2;4) et dans lequel ledit bassin (4) est conçu pour comprendre un liquide conducteur d'ultrasons (9), et
- Un récipient à infusion (7) comprenant une base (701),
**ledit dispositif étant caractérisé en ce qu'**
il comprend des moyens d'absorption de vibrations (6) montés entre l'ensemble rigide (2;4) et un support agencé pour retenir le récipient (5;501;502;503;504), et dans lequel la base (701) du récipient à infusion (7) est dimensionnée pour être retenue par le support de récipient (5;501;502;503;504) et est agencée pour baigner dans le liquide conducteur d'ultrasons du bassin de façon à assurer un contact continu avec le liquide conducteur d'ultrasons (9).

2. Dispositif d'infusion à ultrasons (1) selon la revendication 1, dans lequel le bassin (4) est physiquement relié au générateur d'ondes ultrasoniques (2) par vissage et/ou collage.

3. Dispositif d'infusion à ultrasons (1) selon la revendication 1 ou 2, dans lequel le bassin (4) est en acier inoxydable, de préférence en acier inoxydable 304L.

4. Dispositif d'infusion à ultrasons (1) selon l'une des revendications précédentes, dans lequel les moyens d'absorption de vibrations (6) comprennent des joints, des bumpers et/ou des amortisseurs.

5. Dispositif d'infusion à ultrasons (1) selon l'une des revendications précédentes, dans lequel le récipient à infusion (7) est de forme conique, de préférence de forme Erlenmeyer.

6. Dispositif d'infusion à ultrasons (1) selon l'une des revendications précédentes, dans lequel la base (701) du récipient à infusion (7) a un bord arrondi, de sorte que lorsque ledit bord arrondi repose sur le support de récipient (5;501;502;503;504), la base (701) du récipient à infusion (7) se trouve à une hauteur non nulle au-dessus du fond du bassin (4), mais au-dessous du bord supérieur du bassin (4).

7. Dispositif d'infusion à ultrasons (1) selon la revendication 6, dans lequel, en mode de fonctionnement, la base (701) du récipient à infusion (7) se trouve entre 1 mm et 10 mm au-dessus du fond du bassin (4) et est en contact permanent avec le liquide conducteur d'ultrasons (9) ajouté dans le bassin (4).

8. Dispositif d'infusion à ultrasons (1) selon l'une des revendications précédentes, dans lequel la surface extérieure de la base (701) du récipient à infusion (7) est sablée.

9. Dispositif d'infusion à ultrasons (1) selon l'une des revendications précédentes, dans lequel le support agencé pour retenir le récipient (5;501;502;503;504) fait partie d'un boîtier qui entoure l'ensemble rigide (2;4) et comprend une ouverture supérieure définie par un bord supérieur.

10. Dispositif d'infusion à ultrasons (1) selon la revendication 9, dans lequel le bord supérieur du boîtier entoure les parois du bassin (4) sans les toucher, de sorte qu'une couche d'air subsiste entre le bassin (4) et le boîtier.

11. Dispositif d'infusion à ultrasons (1) selon l'une des revendications précédentes, dans lequel le support agencé pour retenir le récipient (5;501;502;503;504) comprend une surface adhérente et souple sur laquelle le récipient à infusion (7) peut être retenu.

12. Dispositif d'infusion à ultrasons (1) selon la revendication 11, dans lequel la surface adhérente et souple est un joint (504).

13. Dispositif d'infusion à ultrasons (1) selon la revendication 12, dans lequel le joint (504) est conçu pour s'adapter au bord supérieur du bassin (4).

14. Dispositif d'infusion à ultrasons (1) selon la revendication 12 ou 13, dans lequel le joint (504) est creux.

15. Dispositif d'infusion à ultrasons (1) selon l'une des revendications précédentes, dans lequel le liquide conducteur d'ultrasons (9) est de l'eau.
